(19) Europäisches Patentamt
European Patent Office
Office européen des brevets

(11) **EP 4 723 209 A1**

(12) **EUROPEAN PATENT APPLICATION**
published in accordance with Art. 153(4) EPC

(43) Date of publication:
**08.04.2026 Bulletin 2026/15**

(21) Application number: **23938982.8**

(22) Date of filing: **02.06.2023**

(51) International Patent Classification (IPC):
*H01M 4/36* (2006.01)    *H01M 10/0525* (2010.01)

(52) Cooperative Patent Classification (CPC):
Y02E 60/10

(86) International application number:
**PCT/CN2023/098028**

(87) International publication number:
**WO 2024/243996 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **WU, Zeli**
**Ningde, Fujian 352100 (CN)**

• **GUO, Jie**
**Ningde, Fujian 352100 (CN)**
• **HAN, Changlong**
**Ningde, Fujian 352100 (CN)**
• **ZHANG, Cuiping**
**Ningde, Fujian 352100 (CN)**
• **HUANG, Lei**
**Ningde, Fujian 352100 (CN)**

(74) Representative: **Ziebig Hengelhaupt Intellectual Property Attorneys**
**Patentanwaltskanzlei PartGmbB**
**Leipziger Straße 49**
**10117 Berlin (DE)**

(54) **SECONDARY BATTERY AND ELECTRIC DEVICE**

(57)    The present application provides a secondary battery and an electrical apparatus. The secondary battery of the present application comprises an electrolyte solution; the electrolyte solution comprises a solvent and an additive; the solvent comprises ethylene carbonate; the additive comprises 1,3-propane sultone and fluoroethylene carbonate; the percentage mass content of the ethylene carbonate in the electrolyte solution is x%, the percentage mass content of the 1,3-propane sultone in the electrolyte solution is y%, and the percentage mass content of the fluoroethylene carbonate in the electrolyte solution is z%; and the x, the y, and the z satisfy: $10 \leq x/y \leq 950$ and $2 \leq x/z \leq 10$.

**FIG. 1**

EP 4 723 209 A1

**Description**

**TECHNICAL FIELD**

The present application relates to the technical field of secondary batteries, and in particular to a secondary battery and an electrical apparatus.

**BACKGROUND**

In recent years, with increasingly broad application of secondary batteries, the secondary batteries are widely applied in energy storage power systems, such as hydropower, fire power, wind power, and solar power stations, as well as many fields, such as electric tools, electric bicycles, electric motorcycles, electric vehicles, military equipment, and aerospace. Due to great development of the secondary batteries, higher requirements are presented for, e.g., their aerogenesis in high-temperature cycles, high-temperature cycling performance and kinetic performance.

**SUMMARY OF THE INVENTION**

In view of the above issues, the present application is conducted with the purpose of providing a secondary battery and an electrical apparatus. Gas production in high-temperature cycles of the secondary battery of the present application is reduced, and its high-temperature cycling performance, high-temperature storage performance and kinetic performance are improved.

In order to achieve the above purpose, a first aspect of the present application provides a secondary battery, comprising an electrolyte solution, the electrolyte solution comprising a solvent and an additive;

the solvent comprises ethylene carbonate; the additive comprises 1,3-propane sultone and fluoroethylene carbonate; mass content of the ethylene carbonate in the electrolyte solution is denoted as x%, mass content of the 1,3-propane sultone in the electrolyte solution is denoted as y%, and mass content of the fluoroethylene carbonate in the electrolyte solution is denoted as z%; and

the x, the y, and the z satisfy: $10 \leq x/y \leq 950$ and $2 \leq x/z \leq 10$.

Therefore, the present application defines the ratio of the solvent ethylene carbonate to the additive 1,3-propane sultone and defines the ratio of the solvent ethylene carbonate to the additive fluoroethylene carbonate, thereby reducing the gas production in high-temperature cycles of positive and negative electrodes in the secondary battery, reducing impedances of the positive and negative electrodes, and improving the high-temperature cycling performance, high-temperature storage performance and kinetic performance of the secondary battery.

In any embodiment, the secondary battery comprises a positive electrode plate, the positive electrode plate comprising a positive electrode active material;

the positive electrode active material comprising a compound $Li_aNi_bCo_cMn_dM_eO_{2-f}$; wherein

the M includes one or more elements of Al, Fe, Ti, Mg, Zr, Cr, Ga, Cu, Zn, Nb, and B; the a is any value in a range of 0.4-1.2, optionally any value in a range of 0.8-1.2; the b is any value in a range of 0.45-0.9, optionally any value in a range of 0.5-0.7; the c is any value in a range of 0.02-0.25, optionally any value in a range of 0.02-0.2; the d is any value in a range of 0.05-0.5, optionally any value in a range of 0.05-0.48; the e is any value in a range of 0-0.2, optionally any value in a range of 0.001-0.2; and the f is any value in a range of 0-0.3, optionally any value in a range of 0-0.2.

In the secondary battery using the above positive electrode active material, the ratio of the solvent ethylene carbonate to the additive 1,3-propane sultone is defined, and the ratio of the solvent ethylene carbonate to the additive fluoroethylene carbonate is defined, thereby further reducing the gas production in high-temperature cycles of the positive and negative electrodes in the secondary battery, further reducing the impedances of the positive and negative electrodes, and improving the high-temperature cycling performance, high-temperature storage performance and kinetic performance of the secondary battery.

In any embodiment, the positive electrode active material satisfies: $0.02 \leq c/(b + c + d) \leq 0.25$; optionally, $0.03 \leq c/(b + c + d) \leq 0.2$.

Therefore, the degree of disordered arrangement of the elements Li and Ni in the positive electrode material is alleviated, oxidation phenomenon of cobalt ions on the solvent is reduced, stability of the positive electrode active material is improved, the gas production in high-temperature cycles of the secondary battery is reduced, and the high-temperature cycling performance, high-temperature storage performance and kinetic performance of the battery are improved.

In any embodiment, BET specific surface area of the positive electrode active material is 0.1-4 m$^2$/g, optionally

$0.3-3 \text{ m}^2/\text{g}$.

Therefore, during cycles of the secondary battery, the occurrence of high-temperature side reactions is reduced, the gas production in high-temperature cycles of the secondary battery is reduced, the high-temperature storage performance and high-temperature cycling performance of the secondary battery are improved, and the kinetic performance of the secondary battery is improved.

In any embodiment, the electrolyte solution further comprises an electrolyte salt, and the electrolyte salt comprises $LiPO_2F_2$.

In any embodiment, mass content of the $LiPO_2F_2$ in the electrolyte solution is 0.2%-1%.

Using an appropriate amount of $LiPO_2F_2$ as an electrolyte salt is conductive to further reducing the gas production in high-temperature cycles of the secondary battery, further improving the high-temperature cycling performance and high-temperature storage performance of the secondary battery, and further improving the kinetic performance of the secondary battery.

In any embodiment, the additive further comprises a sodium-ion additive and/or a potassium-ion additive;

optionally, the sodium-ion additive comprises one or more of NaF, $Na_2S$, NaFSI, $NaPF_6$, NaDFOB, and NaBOB; and optionally, the potassium-ion additive comprises one or more of KF, $K_2S$, KFSI, $KPF_6$, KDFOB, and KBOB.

In any embodiment, mass content of the sodium-ion additive and/or the potassium-ion additive in the electrolyte solution is 1-2,000 ppm.

Using an appropriate amount of the sodium-ion additive and/or the potassium-ion additive contributes to increasing interlayer spacing of the negative electrode active material and improving the transmission rate of lithium ions, thereby shortening charging duration of the battery, and reducing the problem of lithium plating.

In any embodiment, the x% is any value in a range of 10%-35%, and/or, the y% is any value in a range of 0.02%-1%, and/or, the z% is any value in a range of 1.5%-7.5%.

In any embodiment, the secondary battery is a lithium secondary battery.

A second aspect of the present application further provides an electrical apparatus, comprising the battery in the first aspect of the present application.

DESCRIPTION OF DRAWINGS

FIG. 1 is a schematic diagram of a secondary battery according to an embodiment of the present application.
FIG. 2 is an exploded view of the secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electrical apparatus in which a secondary battery is used as a power source according to an embodiment of the present application.

Description of reference numerals:

1. Battery pack; 2. Upper box; 3. Lower box; 4. Battery module; 5. Secondary battery; 51. Case; 52. Electrode assembly; and 53. Top cover assembly.

DETAILED DESCRIPTION

Embodiments of a secondary battery, a battery module, a battery pack, and an electrical apparatus of the present application are specifically disclosed below with reference to the detailed description of drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application may be combined with each other to form new technical solutions.

If not specifically stated, all steps of the present application may be performed sequentially or randomly, preferably sequentially. For example, a method includes steps (a) and (b), meaning that the method may include steps (a) and (b) performed sequentially, or may include steps (b) and (a) performed sequentially. For example, the reference to the fact that the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "containing" mentioned in the present application may be open-ended, or may be closed-ended. For example, "including" and "containing" may indicate that it is possible to include or contain other components not listed, and it is also possible to include or contain only the listed components.

If not specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

[Secondary battery]

A secondary battery also known as a rechargeable battery or a storage battery refers to a battery that can be used continually by activating an active material in a charging manner after the battery is discharged.

Generally, the secondary battery includes a positive electrode plate, a negative electrode plate, a separator and an electrolyte. During charging and discharging of the battery, active ions (e.g., lithium ions) are intercalated and deintercalated back and forth between the positive electrode plate and the negative electrode plate. The separator is arranged between the positive electrode plate and the negative electrode plate, and mainly functions to prevent a short circuit between the positive electrode and the negative electrode while allowing active ions to pass through. The electrolyte solution serves for conducting the active ions between the positive electrode plate and the negative electrode plate.

An embodiment of the present application provides a secondary battery, comprising an electrolyte solution, the electrolyte solution comprising a solvent and an additive; wherein

the solvent comprises ethylene carbonate; the additive comprises 1,3-propane sultone and fluoroethylene carbonate; mass content of the ethylene carbonate in the electrolyte solution is denoted as $x\%$, mass content of the 1,3-propane sultone in the electrolyte solution is denoted as $y\%$, and mass content of the fluoroethylene carbonate in the electrolyte solution is denoted as $z\%$; and

the $x$, the $y$, and the $z$ satisfy: $10 \leq x/y \leq 950$ and $2 \leq x/z \leq 10$. The $x/y$ may be, for example, 10, 15, 20, 30, 50, 60, 80, 100, 140, 160, 200, 240, 270, 300, 350, 380, 400, 430, 460, 500, 550, 600, 650, 700, 750, 800, 830, 850, 870, 900, 920, 930, 950, and a range consisting of any of the above values. The $x/z$ may be, for example, 2, 2.5, 3, 3.5, 3.8, 4, 4.5, 5, 6, 7, 8, 9, 10, and a range consisting of any of the above values.

Although the mechanism is not clear, the applicant unexpectedly finds that: the present application defines the ratio of the solvent ethylene carbonate to the additive 1,3-propane sultone and defines the ratio of the solvent ethylene carbonate to the additive fluoroethylene carbonate, thereby reducing the gas production in high-temperature cycles of the positive and negative electrodes in the secondary battery, reducing the impedances of the positive and negative electrodes, and improving the high-temperature cycling performance, high-temperature storage performance and kinetic performance of the secondary battery.

In some embodiments, the secondary battery comprises a positive electrode plate, the positive electrode plate comprising a positive electrode active material;

the positive electrode active material comprising $Li_aNi_bCo_cMn_dM_eO_{2-f}$; wherein

the M includes one or more elements of Al, Fe, Ti, Mg, Zr, Cr, Ga, Cu, Zn, Nb, and B; the a is any value in a range of 0.4-1.2, optionally any value in a range of 0.8-1.2, for example, 0.4, 0.5, 0.6, 0.7, 0.8, 0.9, 1.0, 1.1, 1.2, and a range consisting of any of the above values; the b is any value in a range of 0.45-0.9, optionally any value in a range of 0.5-0.7, for example, 0.45, 0.5, 0.55, 0.6, 0.65, 0.7, 0.75, 0.8, 0.9, and a range consisting of any of the above values; the c is any value in a range of 0.02-0.25, optionally any value in a range of 0.02-0.2, for example, 0.02, 0.03, 0.05, 0.07, 0.1, 0.12, 0.14, 0.15, 0.17, 0.19, 0.2, 0.21, 0.22, 0.23, 0.25, and a range consisting of any of the above values; the d is any value in a range of 0.05-0.5, optionally any value in a range of 0.05-0.48, for example, 0.05, 0.1, 0.15, 0.2, 0.25, 0.3, 0.35, 0.4, 0.45, 0.47, 0.48, 0.5, and a range consisting of any of the above values; the e is any value in a range of 0-0.2, optionally any value in a range of 0.001-0.2, for example, 0, 0.001, 0.01, 0.05, 0.1, 0.15, 0.2, and a range consisting of any of the above values; and the f is any value in a range of 0-0.3, optionally any value in a range of 0-0.2, for example, 0, 0.05, 0.1, 0.15, 0.2, 0.25, 0.3, and a range consisting of any of the above values.

Therefore, in the secondary battery using the above positive electrode active material, the ratio of the solvent ethylene carbonate to the additive 1,3-propane sultone is defined, and the ratio of the solvent ethylene carbonate to the additive fluoroethylene carbonate is defined, thereby further reducing the gas production in high-temperature cycles of the positive and negative electrodes in the secondary battery, further reducing the impedances of the positive and negative electrodes, and improving the high-temperature cycling performance, high-temperature storage performance and kinetic performance of the secondary battery.

In some embodiments, the positive electrode active material satisfies: $0.02 \leq c/(b+c+d) \leq 0.25$; optionally, $0.03 \leq c/(b+c+d) \leq 0.2$, for example, $c/(b+c+d)$ may be 0.02, 0.03, 0.05, 0.07, 0.1, 0.15, 0.17, 0.2, 0.24, 0.23, 0.25, and a range consisting of any of the above values.

Therefore, the degree of disordered arrangement of the elements Li and Ni in the positive electrode material is alleviated, oxidation phenomenon of cobalt ions on the solvent is reduced, stability of the positive electrode active material is improved, the gas production in high-temperature cycles of the secondary battery is reduced, and the high-temperature cycling performance, high-temperature storage performance and kinetic performance of the battery are improved.

In some embodiments, BET specific surface area of the positive electrode active material is 0.1-4 $m^2/g$, optionally 0.3-3 $m^2/g$, and is, for example, 0.1 $m^2/g$, 0.2 $m^2/g$, 0.3 $m^2/g$, 0.5 $m^2/g$, 0.7 $m^2/g$, 1 $m^2/g$, 1.5 $m^2/g$, 2 $m^2/g$, 2.5 $m^2/g$, 3 $m^2/g$, 3.5 $m^2/g$, 4 $m^2/g$, and a range consisting of any of the above values.

Therefore, during cycles of the secondary battery, the occurrence of high-temperature side reactions is reduced, the gas production in high-temperature cycles of the secondary battery is reduced, the high-temperature storage performance and high-temperature cycling performance of the secondary battery are improved, and the kinetic performance of the secondary battery is improved.

In some embodiments, the BET specific surface area is BET specific surface area tested at liquid nitrogen temperature and under a pressure of 0.08 MPa-0.12 MPa.

In some embodiments, the BET specific surface area is tested using a conventional method in the art. For example: the standard GB/T19587-2004 (Determination of the specific surface area of solids by gas adsorption using the BET method) is referred to for the test method. Specific method: an sample to be tested is loaded into a sample tube, to record initial mass of the sample to be tested; the weighed sample to be tested is loaded into a device NOVA2000e, and then degassed; the sample to be tested is heated to 200 °C, and kept at the temperature for 2 h, and then mass of the degassed sample to be tested is recorded. Then, the degassed sample to be tested is re-loaded into the device, into which liquid nitrogen is poured for BET testing. The nitrogen pressure is set to 0.08 MPa-0.12 MPa. After the test is complete, the BET specific surface area is calculated from the test results.

In some embodiments, the electrolyte solution further comprises an electrolyte salt, and the electrolyte salt comprises $LiPO_2F_2$.

In some embodiments, mass content of the $LiPO_2F_2$ in the electrolyte solution is 0.2%-1%, for example, 0.2%, 0.3%, 0.4%, 0.5%, 0.6%, 0.7%, 0.8%, 0.9%, 1%, and a range consisting of any of the above values.

Using an appropriate amount of $LiPO_2F_2$ as an electrolyte salt is conductive to further reducing the gas production in high-temperature cycles of the secondary battery, further improving the high-temperature cycling performance and high-temperature storage performance of the secondary battery, and further improving the kinetic performance of the secondary battery.

In some embodiments, the additive further comprises a sodium-ion additive and/or a potassium-ion additive;

optionally, the sodium-ion additive comprises one or more of NaF, $Na_2S$, NaFSI (sodium bis(fluorosulfonyl)imide), $NaPF_6$, NaDFOB (sodium difluoro(oxalato)borate), and NaBOB (sodium bis(oxalato)borate); and
optionally, the potassium-ion additive comprises one or more of KF, $K_2S$, KFSI (potassium bis(fluorosulfonyl)imide), $KPF_6$, KDFOB (potassium difluorooxalate borate), and KBOB (potassium bis(oxalato)borate).

In the present application, the above sodium-ion additive may be added additionally, or may be formed by combining additionally added sodium ions with anions present in the battery system, or may be formed by combining additionally added anions with sodium ions present in the battery system, or may be formed by combining sodium ions and anions present in the battery system.

In the present application, the above potassium-ion additive may be added additionally, or may be formed by combining additionally added potassium ions with anions present in the battery system, or may be formed by combining additionally added anions with potassium ions present in the battery system, or may be formed by combining potassium ions and anions present in the battery system.

In some embodiments, mass content of the sodium-ion additive and/or the potassium-ion additive in the electrolyte solution is 1-2,000 ppm, for example, 1 ppm, 10 ppm, 20 ppm, 30 ppm, 50 ppm, 100 ppm, 200 ppm, 300 ppm, 400 ppm, 500 ppm, 600 ppm, 700 ppm, 800 ppm, 900 ppm, 1,000 ppm, and a range consisting of any of the above values.

Using an appropriate amount of the sodium-ion additive and/or the potassium-ion additive contributes to increasing interlayer spacing of the negative electrode active material and improving the transmission rate of lithium ions, thereby shortening charging duration of the battery, and reducing the problem of lithium plating.

In some embodiments, the x% is any value in a range of 10%-35%, for example, 10%, 15%, 20%, 25%, 30%, 35%, and a range consisting of any of the above values, and/or,

the y% is any value in a range of 0.02%-1%, for example, 0.02%, 0.05%, 0.01%, 0.05%, 0.07%, 0.08%, 1%, and a range consisting of any of the above values, and/or,
the z% is any value in a range of 1.5%-7.5%, for example, 1.5%, 2%, 2.5%, 3%, 3.5%, 4%, 4.5%, 5%, 5.5%, 6%, 6.5%, 7%, 7.5%, and a range consisting of any of the above values.

In some embodiments, the secondary battery is a lithium secondary battery.

[Positive electrode plate]

The positive electrode plate generally comprises a positive electrode current collector and a positive electrode film layer arranged on at least one surface of the positive electrode current collector, and the positive electrode film layer comprises the positive electrode active material.

As an example, the positive electrode current collector has two surfaces opposite in its own thickness direction, and the positive electrode film layer is arranged on any one or both of the two opposite surfaces of the positive electrode current collector.

In some embodiments, the positive electrode current collector may be a metal foil or a composite current collector. For example, an aluminum foil may be used as the metal foil. The composite current collector may comprise a polymer material substrate layer and a metal layer formed on at least one surface of the polymer material substrate layer. The composite current collector may be formed by forming a metal material (such as aluminum, an aluminum alloy, nickel, a nickel alloy, titanium, a titanium alloy, silver, and a silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, other conventional materials that may be used as positive electrode active materials for batteries may also be used as the positive electrode active material. As an example, at least one of the following materials may be included: a lithium-containing phosphate of olivine structure, a lithium-cobalt oxide (such as $LiCoO_2$), a lithium-manganese oxide (such as $LiMnO_2$ or $LiMn_2O_4$), a lithium-manganese-cobalt oxide, a lithium-nickel-cobalt-aluminum oxide (such as $LiNi_{0.85}Co_{0.15}Al_{0.05}O_2$), and a modified compound thereof, etc. Examples of the lithium-containing phosphate of olivine structure may include, but are not limited to, at least one of a lithium iron phosphate (e.g., $LiFePO_4$ (or abbreviated as LFP)), a lithium iron phosphate-carbon composite material, a lithium manganese phosphate (e.g., $LiMnPO_4$), a lithium manganese phosphate-carbon composite material, a lithium iron manganese phosphate, and a lithium iron manganese phosphate-carbon composite material. However, when the technical solutions of the present application adopt the aforementioned positive electrode active material $Li_aNi_bCo_cMn_dM_eO_{2-f}$, the gas production in high-temperature cycles of the positive and negative electrodes is further reduced, the impedances of the positive and negative electrodes are further reduced, and the high-temperature cycling performance, high-temperature storage performance and kinetic performance of the secondary battery are further improved.

In some embodiments, the positive electrode film layer further optionally comprises a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylenehexafluoropropylene copolymer, and a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder and any other component, for preparing the positive electrode plate in a solvent (such as N-methyl pyrrolidone) to form a positive electrode slurry; and coating the positive electrode slurry on the positive electrode current collector, and performing drying and cold pressing processes to obtain the positive electrode plate.

[Negative electrode plate]

The negative electrode plate includes a negative electrode current collector and a negative electrode film layer arranged on at least one surface of the negative electrode current collector, where the negative electrode film layer includes a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil may be used as the metal foil. The composite current collector can comprise a polymer material substrate layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative electrode active material may include at least one of the following materials: artificial graphite, natural graphite, soft carbon, hard carbon, silicon-based material, tin-based material, lithium titanate, etc. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally includes a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

[Electrolyte]

In some embodiments, the electrolyte salt may further include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalate)borate, lithium difluorobis(oxalato)phosphate, and lithium tetrafluoro(oxalato)phosphate.

In some embodiments, the solvent may further include at least one of ethyl methyl carbonate, diethyl carbonate, dimethyl carbonate, dipropyl carbonate, methyl propyl carbonate, ethyl propyl carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. As an example, the additive may include an additive that can improve certain performances of the battery, such as an additive that improves the overcharge performance of the battery or an additive that improves the high-temperature or low-temperature performance of the battery.

[Separator]

In some embodiments, the secondary battery further comprises a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can comprise an outer package. The outer packaging can be used for encapsulating the above electrode assembly and electrolyte.

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc.

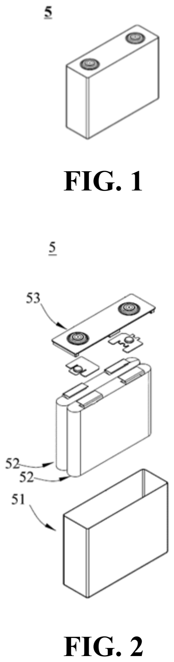

The shape of the secondary battery is not particularly limited in the present application, and may be a cylinder, a square, or any other shape. For example, FIG. 1 shows a secondary battery 5 with a square structure as an example.

In some embodiments, referring to FIG. 2, the outer package may comprise a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode plate, the negative electrode plate, and the separator can be wound or laminated to form an electrode assembly 52. The electrode assembly 52 is encapsulated within the accommodating cavity. The electrolyte infiltrates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

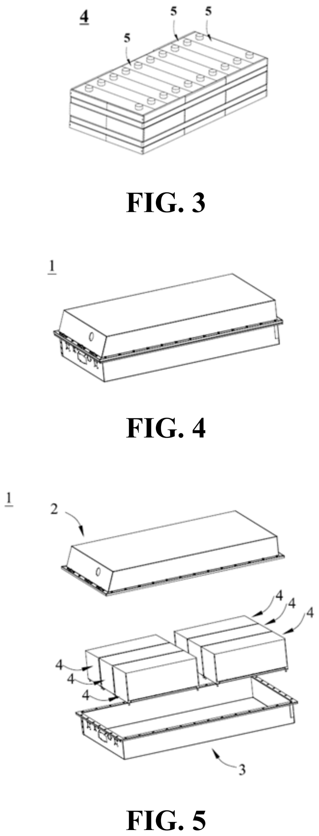

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further comprise a shell having an accommodating space, in which the plurality of secondary batteries 5 is accommodated.

In some embodiments, the above battery modules may be further assembled into a battery pack, the number of battery modules included in the battery pack may be one or more, and the specific number may be selected by those skilled in the art based on the application and capacity of the battery pack.

Figs. 4 and 5 show a battery pack 1 as an example. Referring to FIGs. 4 and 5, the battery pack 1 may comprise a battery box and a plurality of battery modules 4 provided in the battery box. The battery box comprises an upper box 2 and a lower box 3, wherein the upper box 2 can cover the lower box 3 to form an enclosed space for accommodating the battery module 4. The plurality of battery modules 4 may be arranged in the battery box in any manner.

In addition, the present application further provides an electrical apparatus. The electrical apparatus includes at least one of the secondary battery, the battery module, or the battery pack provided in the present application. The secondary battery, the battery module, or the battery pack may be used as a power source for the electrical apparatus, and may also be used as an energy storage unit for the electrical apparatus. The electrical apparatus may include a mobile device (e.g., a mobile phone, a laptop, etc.), an electric vehicle (e.g., all-electric vehicle, a hybrid electric vehicle, a plug-in hybrid electric vehicle, an electric bicycle, an electric scooter, an electric golf cart, an electric truck, etc.), an electric train, a ship and a satellite, and an energy storage system, etc., but is not limited thereto.

For the electrical apparatus, the secondary battery, the battery module, or the battery pack can be selected according to its use requirements.

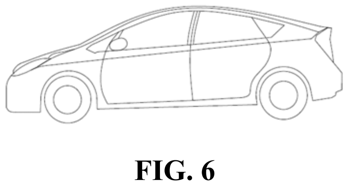

FIG. 6 shows an electrical apparatus as an example. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

[EXAMPLES]

Examples of the present application will be described below. Examples described below are illustrative and only used to explain the present application, and cannot be construed as limiting the present application. In Examples in which no specific technologies or conditions are specified, technologies or conditions described in the literature in the art or product specifications are followed. The reagents or instruments used without manufacturer indicated are all commercially available conventional products.

**Example 1**

(1) Preparation of a positive electrode plate: a positive electrode active material $LiNi_{0.5}Co_{0.1}Mn_{0.4}O_2$, a binder polyvinylidene fluoride (PVDF), and a conductive agent acetylene black in a mass ratio of 8:1:1 were dissolved in a solvent N-methylpyrrolidone (NMP), and the mixture was fully mixed by sufficiently stirring to prepare a positive electrode slurry; the positive electrode slurry was uniformly coated on a positive electrode current collector aluminum foil, and then subjected to drying, cold pressing, and slitting, to provide the positive electrode plate.

(2) Preparation of a negative electrode plate: a negative electrode active material artificial graphite, a conductive agent acetylene black, a binder styrene butadiene rubber (SBR), and a thickener sodium carboxymethyl cellulose (CMC-Na) in a mass ratio of 90:5:4:1 were dissolved in deionized water, and the mixture was fully mixed by sufficiently stirring to prepare a negative electrode slurry; the negative electrode slurry was coated on a negative electrode current collector copper foil, and then subjected to drying, cold pressing, and slitting, to provide the negative electrode plate.

(3) Separator: a polypropylene film was used.

(4) Preparation of an electrolyte solution: in a glove box with an argon atmosphere containing water and oxygen≤20 ppm, solvents ethylene carbonate and ethyl methyl carbonate were mixed, and then 1,3-propane sultone, fluoroethylene carbonate, and an electrolyte salt $LiPF_6$ were uniformly dissolved in the above solution to provide the electrolyte solution. In the electrolyte solution, the mass content of the electrolyte salt $LiPF_6$ is 10%, the mass content of the ethylene carbonate is 15%, the mass content of the 1,3-propane sultone is 1%, the mass content of the fluoroethylene carbonate is 5%, and the balance is ethyl methyl carbonate.

(5) Preparation of a secondary battery: the positive electrode plate, the separator, and the negative electrode plate mentioned above were stacked and wound sequentially, to obtain an electrode assembly; the electrode assembly was placed in an outer package, into which the electrolyte solution prepared above was added, followed by the processes, such as encapsulation, standing, formation, and aging, to provide the secondary battery.

The preparation method of the secondary battery in Examples 2-22 and Comparative Examples 1-4 is similar to that in Example 1, except for different product parameters detailed in Table 1.

All positive electrode active materials in Examples 1-22 and Comparative Examples 1-4 were purchased from Guangdong BRUNP Company.

Table 1: Parameter results in Examples 1-22 and Comparative Examples 1-4

| Serial No. | Positive electrode active material | | | | | | | | Electrolyte solution | | | | | | | | |
|---|---|---|---|---|---|---|---|---|---|---|---|---|---|---|---|---|---|
| | Chemical formula | a | b | c | d | f | c/(b+c+d) | BET (m²/g ) | Mass content of ethylene carbonate in electrolyte solution x(%) | Mass content of 1,3-propane sultone in electrolyte solution y(%) | Mass content of fluoroethylene carbonate in electrolyte solution z(%) | x/y | x/z | Mass content of LiPO₂F₂ in electrolyte solution (%) | Mass content of LiPF₆ in electrolyte solution (%) | Sodium-ion additive and mass content thereof in electrolyte solution | Potassium-ion additive and mass content thereof in electrolyte solution |
| Example 1 | $LiNi_{0.5}Co_{0.1}Mn_{0.4}O_2$ | 1 | 0.5 | 0.1 | 0.4 | 0 | 0.1 | 2.5 | 15 | 1 | 5 | 15 | 3 | 0 | 10 | 0 | 0 |
| Example 2 | $LiNi_{0.5}Co_{0.1}Mn_{0.4}O_2$ | 1 | 0.5 | 0.1 | 0.4 | 0 | 0.1 | 2.5 | 10 | 1 | 5 | 10 | 2 | 0 | 10 | 0 | 0 |
| Example 3 | $LiNi_{0.5}Co_{0.1}Mn_{0.4}O_2$ | 1 | 0.5 | 0.1 | 0.4 | 0 | 0.1 | 2.5 | 19 | 0.02 | 5 | 950 | 3.8 | 0 | 10 | 0 | 0 |
| Example 4 | $LiNi_{0.5}Co_{0.1}Mn_{0.4}O_2$ | 1 | 0.5 | 0.1 | 0.4 | 0 | 0.1 | 2.5 | 15 | 1 | 7.5 | 15 | 2 | 0 | 10 | 0 | 0 |
| Example 5 | $LiNi_{0.5}Co_{0.1}Mn_{0.4}O_2$ | 1 | 0.5 | 0.1 | 0.4 | 0 | 0.1 | 2.5 | 15 | 1 | 1.5 | 15 | 10 | 0 | 10 | 0 | 0 |
| Example 6 | $Li_{0.8}Ni_{0.5}Co_{0.1}Mn_{0.4}O_{1.9}$ | 0.8 | 0.5 | 0.1 | 0.4 | 0.1 | 0.1 | 2.5 | 10 | 1 | 5 | 10 | 2 | 0 | 10 | 0 | 0 |
| Example 7 | $Li_{0.8}Ni_{0.5}Co_{0.1}Mn_{0.4}O_{1.9}$ | 0.8 | 0.5 | 0.1 | 0.4 | 0.1 | 0.1 | 2.5 | 35 | 1 | 5 | 35 | 7 | 0 | 10 | 0 | 0 |
| Example 8 | $LiNi_{0.5}Co_{0.03}Mn_{0.47}O_2$ | 1 | 0.5 | 0.03 | 0.47 | 0 | 0.03 | 2.5 | 15 | 1 | 5 | 15 | 3 | 0 | 10 | 0 | 0 |
| Example 9 | $LiNi_{0.5}Co_{0.2}Mn_{0.3}O_2$ | 1 | 0.5 | 0.2 | 0.3 | 0 | 0.2 | 2.5 | 15 | 1 | 5 | 15 | 3 | 0 | 10 | 0 | 0 |
| Example 10 | $LiNi_{0.5}Co_{0.1}Mn_{0.4}O_2$ | 1 | 0.5 | 0.1 | 0.4 | 0 | 0.1 | 0.3 | 15 | 1 | 5 | 15 | 3 | 0 | 10 | 0 | 0 |
| Example 11 | $LiNi_{0.5}Co_{0.1}Mn_{0.4}O_2$ | 1 | 0.5 | 0.1 | 0.4 | 0 | 0.1 | 3 | 15 | 1 | 5 | 15 | 3 | 0 | 10 | 0 | 0 |
| Example 12 | $LiNi_{0.5}Co_{0.1}Mn_{0.4}O_2$ | 1 | 0.5 | 0.1 | 0.4 | 0 | 0.1 | 2.5 | 15 | 1 | 5 | 15 | 3 | 0.5 | 10 | 0 | 0 |
| Example 13 | $LiNi_{0.5}Co_{0.1}Mn_{0.4}O_2$ | 1 | 0.5 | 0.1 | 0.4 | 0 | 0.1 | 2.5 | 15 | 1 | 5 | 15 | 3 | 0 | 10 | Sodium hexafluoro phosphate 1,000 ppm | 0 |
| Example 14 | $LiNi_{0.5}Co_{0.1}Mn_{0.4}O_2$ | 1 | 0.5 | 0.1 | 0.4 | 0 | 0.1 | 2.5 | 15 | 1 | 5 | 15 | 3 | 0 | 10 | 0 | Potassium hexafluorop hosphate 100 ppm |
| Example 15 | $LiNi_{0.5}Co_{0.1}Mn_{0.4}O_2$ | 1 | 0.5 | 0.1 | 0.4 | 0 | 0.1 | 2.5 | 15 | 1 | 5 | 15 | 3 | 0 | 10 | Sodium hexafluoro phosphate 1,000 ppm | Potassium hexafluorop hosphate 100 ppm |

| Serial No. | Positive electrode active material | | | | | | | | Electrolyte solution | | | | | | | | |
|---|---|---|---|---|---|---|---|---|---|---|---|---|---|---|---|---|---|
| | Chemical formula | a | b | c | d | f | c/(b+c+d) | BET (m²/g) | Mass content of ethylene carbonate in electrolyte solution x(%) | Mass content of 1,3-propane sultone in electrolyte solution y(%) | Mass content of fluoroethylene carbonate in electrolyte solution z(%) | x/y | x/z | Mass content of LiPO₂F₂ in electrolyte solution (%) | Mass content of LiPF₆ in electrolyte solution (%) | Sodium-ion additive and mass content thereof in electrolyte solution | Potassium-ion additive and mass content thereof in electrolyte solution |
| Example 16 | $LiNi_{0.6}Co_{0.2}Mn_{0.2}O_2$ | 1 | 0.6 | 0.2 | 0.2 | 0 | 0.2 | 2.5 | 15 | 1 | 5 | 15 | 3 | 0 | 10 | 0 | 0 |
| Example 17 | $LiNi_{0.7}Co_{0.1}Mn_{0.2}O_2$ | 1 | 0.7 | 0.1 | 0.2 | 0 | 0.1 | 2.5 | 15 | 1 | 5 | 15 | 3 | 0 | 10 | 0 | 0 |
| Example 18 | $LiNi_{0.9}Co_{0.05}Mn_{0.05}O_2$ | 1 | 0.9 | 0.05 | 0.05 | 0 | 0.05 | 2.5 | 15 | 1 | 5 | 15 | 3 | 0 | 10 | 0 | 0 |
| Example 19 | $LiNi_{0.5}Co_{0.02}Mn_{0.48}O_2$ | 1 | 0.5 | 0.02 | 0.48 | 0 | 0.02 | 2.5 | 15 | 1 | 5 | 15 | 3 | 0 | 10 | 0 | 0 |
| Example 20 | $LiNi_{0.5}Co_{0.25}Mn_{0.25}O_2$ | 1 | 0.5 | 0.25 | 0.25 | 0 | 0.25 | 2.5 | 15 | 1 | 5 | 15 | 3 | 0 | 10 | 0 | 0 |
| Example 21 | $LiNi_{0.5}Co_{0.1}Mn_{0.4}O_2$ | 1 | 0.5 | 0.1 | 0.4 | 0 | 0.1 | 0.1 | 15 | 1 | 5 | 15 | 3 | 0 | 10 | 0 | 0 |
| Example 22 | $LiNi_{0.5}Co_{0.1}Mn_{0.4}O_2$ | 1 | 0.5 | 0.1 | 0.4 | 0 | 0.1 | 4 | 15 | 1 | 5 | 15 | 3 | 0 | 10 | 0 | 0 |
| Comparative Example 1 | $LiNi_{0.5}Co_{0.1}Mn_{0.4}O_2$ | 1 | 0.5 | 0.1 | 0.4 | 0 | 0.1 | 2.5 | 10 | 5 | 5 | 2 | 2 | 0 | 10 | 0 | 0 |
| Comparative Example 2 | $LiNi_{0.5}Co_{0.1}Mn_{0.4}O_2$ | 1 | 0.5 | 0.1 | 0.4 | 0 | 0.1 | 2.5 | 50 | 0.05 | 5 | 1000 | 10 | 0 | 10 | 0 | 0 |
| Comparative Example 3 | $LiNi_{0.5}Co_{0.1}Mn_{0.4}O_2$ | 1 | 0.5 | 0.1 | 0.4 | 0 | 0.1 | 2.5 | 15 | 1 | 10 | 15 | 1.5 | 0 | 10 | 0 | 0 |
| Comparative Example 4 | $LiNi_{0.5}Co_{0.1}Mn_{0.4}O_2$ | 1 | 0.5 | 0.1 | 0.4 | 0 | 0.1 | 2.5 | 15 | 1 | 1 | 15 | 15 | 0 | 10 | 0 | 0 |

EP 4 723 209 A1

Material testing and battery testing

(1) Testing for BET specific surface area:

The standard GB/T19587-2004 (Determination of the specific surface area of solids by gas adsorption using the BET method) was referred to for the test method.

8-15 g of a sample to be tested was loaded into a sample tube, and initial mass of the sample to be tested was loaded. The weighed sample to be tested was loaded into a device NOVA2000e, and then degassed; the sample to be tested was heated to 200 °C, and kept at the temperature for 2 h, and then mass of the degassed sample to be tested was recorded. Then, the degassed sample to be tested was re-loaded into the device, into which liquid nitrogen was poured for BET testing. The nitrogen pressure was set to 0.08 MPa-0.12 MPa. After the test was complete, the BET specific surface area was calculated from the test results.

(2) Testing for volume expansion rate of the battery:

At 60°C, the battery was charged to 4.3V at a constant current of 1C, and further charged at a constant voltage until the current was 0.05C. In this case, the battery volume was tested by drainage method and denoted as V0. The battery was loaded into a thermostat at 60°C, and taken out after storage for 30 days. In this case, the battery volume was tested by drainage method and denoted as V1. The battery volume expansion rate was calculated according to the following formula.

$$\text{Battery volume expansion rate (\%)} = [(V1\text{-}V0)/V0] \times 100\% \,.$$

(3) Testing for high-temperature cycling performance of the battery:

At 45°C, the battery was charged to 4.3V at a constant current of 1C, further charged at a constant voltage until the current was 0.05C, left to stand for 5 min, and then discharged to 2.8V at a constant current of 1C, which was a charge-discharge process, and the discharge capacity in this case was denoted as discharge capacity at first cycle. By cyclic charge-discharge of the battery according to the above method, the discharge capacity after each charge-discharge cycle was recorded, totaling 600 cycles. The cycling capacity retention rate of the battery was calculated according to the following formula.

Battery cycling capacity retention rate (%)=100%×discharge capacity at 600th cycle/discharge capacity at first cycle.

(4) Testing for DCR of the battery:

At 25°C, the battery was charged to 4.3V at a constant current of 0.1C, and discharged at 0.5C for 30 min. In this case, the voltage was denoted as V0. Then the battery was discharged at 4C for 30 S. In this case, the voltage was denoted as V1, and the DCR was calculated according to the following formula.

$$\text{DCR}=(V0\text{-}V1)/I,$$

wherein I=4C.

The result of the above item (1) is shown in Table 1, and the results of the above items (2) to (4) are shown in Table 2.

Table 2: Performance test results of Examples 1-22 and Comparative Examples 1-4

| Serial No. | Volume expansion rate after storage at 60°C for 30 days (%) | Capacity retention rate after 600 cycles at 45°C (%) | DCR (mΩ) |
|---|---|---|---|
| Example 1 | 15.3 | 88.5 | 17.7 |
| Example 2 | 16.6 | 86.6 | 19.1 |
| Example 3 | 17.1 | 86.1 | 20.1 |
| Example 4 | 16.9 | 85.6 | 19.1 |
| Example 5 | 17.5 | 85.1 | 19.3 |

(continued)

| Serial No. | Volume expansion rate after storage at 60°C for 30 days (%) | Capacity retention rate after 600 cycles at 45°C (%) | DCR (mΩ) |
|---|---|---|---|
| Example 6 | 16.7 | 86.3 | 18.9 |
| Example 7 | 17.1 | 87.1 | 19.9 |
| Example 8 | 17.8 | 86.1 | 22.1 |
| Example 9 | 16.5 | 86.1 | 17.7 |
| Example 10 | 15.1 | 88.1 | 20.1 |
| Example 11 | 16.7 | 85.1 | 17.1 |
| Example 12 | 15.1 | 89.1 | 17.3 |
| Example 13 | 15.2 | 88.1 | 17.6 |
| Example 14 | 15.5 | 88.3 | 17.9 |
| Example 15 | 14.6 | 89.1 | 16.5 |
| Example 16 | 15.9 | 86.5 | 18.7 |
| Example 17 | 15.8 | 85.5 | 19.7 |
| Example 18 | 18.1 | 81.8 | 20.1 |
| Example 19 | 22.4 | 73.6 | 22.1 |
| Example 20 | 22.5 | 74.1 | 22.6 |
| Example 21 | 22.6 | 75.1 | 21.9 |
| Example 22 | 22.8 | 72.1 | 23.1 |
| Comparative Example 1 | 26.5 | 69.9 | 24.1 |
| Comparative Example 2 | 26.8 | 68.8 | 24.5 |
| Comparative Example 3 | 26.9 | 65.5 | 23.9 |
| Comparative Example 4 | 26.5 | 65.3 | 24.1 |

As can be seen from the above results:
Compared with Comparative Examples 1-4, the secondary battery in Examples 1-22 of the present application has lower gas production in high-temperature cycles, longer high-temperature cycle life, and lower DCR, showing that the gas production in high-temperature cycles of the secondary battery of the present application is reduced, and its high-temperature cycling performance and kinetic performance are improved.

Compared with Examples 19-22, the secondary battery in Examples 1-18 of the present application has lower gas production in high-temperature cycles, longer high-temperature cycle life, and lower DCR.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1.    A secondary battery, comprising an electrolyte solution, the electrolyte solution comprising a solvent and an additive; wherein

the solvent comprises ethylene carbonate; the additive comprises 1,3-propane sultone and fluoroethylene carbonate; the percentage mass content of the ethylene carbonate in the electrolyte solution is x%, the percentage mass content of the 1,3-propane sultone in the electrolyte solution is y%, and the percentage mass content of the fluoroethylene carbonate in the electrolyte solution is z%; and
the x, the y, and the z satisfy: $10 \leq x/y \leq 950$ and $2 \leq x/z \leq 10$.

2. The secondary battery according to claim 1, wherein the secondary battery comprises a positive electrode plate, the positive electrode plate comprising a positive electrode active material;

the positive electrode active material comprising a compound $Li_aNi_bCo_cMn_dM_eO_{2-f}$; wherein
the M includes one or more elements of Al, Fe, Ti, Mg, Zr, Cr, Ga, Cu, Zn, Nb, and B;
the a is any value in a range of 0.4-1.2, optionally any value in a range of 0.8-1.2; the b is any value in a range of 0.45-0.9, optionally any value in a range of 0.5-0.7; the c is any value in a range of 0.02-0.25, optionally any value in a range of 0.02-0.2; the d is any value in a range of 0.05-0.5, optionally any value in a range of 0.05-0.48; the e is any value in a range of 0-0.2, optionally any value in a range of 0.001-0.2; and the f is any value in a range of 0-0.3, optionally any value in a range of 0-0.2.

3. The secondary battery according to claim 2, wherein the positive electrode active material satisfies:

$$0.02 \leq c/(b + c + d) \leq 0.25;$$

optionally,

$$0.03 \leq c/(b + c + d) \leq 0.2.$$

4. The secondary battery according to claim 2 or 3, wherein BET specific surface area of the positive electrode active material is 0.1-4 m$^2$/g, optionally 0.3-3 m$^2$/g.

5. The secondary battery according to any one of claims 1 to 4, wherein the electrolyte solution further comprises an electrolyte salt, and the electrolyte salt comprises $LiPO_2F_2$.

6. The secondary battery according to claim 5, wherein the mass content of the $LiPO_2F_2$ in the electrolyte solution is 0.2%-1%.

7. The secondary battery according to any one of claims 1 to 6, wherein the additive further comprises a sodium-ion additive and/or a potassium-ion additive;

optionally, the sodium-ion additive comprises one or more of NaF, $Na_2S$, NaFSI, $NaPF_6$, NaDFOB, and NaBOB; and
optionally, the potassium-ion additive comprises one or more of KF, $K_2S$, KFSI, $KPF_6$, KDFOB, and KBOB.

8. The secondary battery according to claim 7, wherein the mass content of the sodium-ion additive and/or the potassium-ion additive in the electrolyte solution is 1-2,000 ppm.

9. The secondary battery according to any one of claims 1 to 8, wherein

the x% is any value in a range of 10%-35%, and/or
the y% is any value in a range of 0.02%-1%, and/or
the z% is any value in a range of 1.5%-7.5%.

10. The secondary battery according to any one of claims 1 to 9, wherein the secondary battery is a lithium secondary battery.

11. An electrical apparatus, comprising the secondary battery according to any one of claims 1 to 10.

**FIG. 1**

**FIG. 2**

**FIG. 3**

**FIG. 4**

**FIG. 5**

**FIG. 6**

## INTERNATIONAL SEARCH REPORT

| International application No. |
|---|
| **PCT/CN2023/098028** |

**A. CLASSIFICATION OF SUBJECT MATTER**

H01M4/36(2006.01)i; H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 电解液, 碳酸乙烯酯, 碳酸亚乙酯, 丙磺酸内酯, 氟代碳酸乙烯酯, 氟代碳酸亚乙酯, 三元, 掺杂, 改性, 钠, 钾, batter+, cell?, electrolyte, ethylene carbonate, propane sultone, fluoroethylene carbonate, ternary, dop+, modifi+, sodium, potassium

**C. DOCUMENTS CONSIDERED TO BE RELEVANT**

| Category* | Citation of document, with indication, where appropriate, of the relevant passages | Relevant to claim No. |
|---|---|---|
| X | CN 111326719 A (CONTEMPORARY AMPEREX TECHNOLOGY CO., LTD.) 23 June 2020 (2020-06-23) description, paragraphs 13 and 127-139 | 1, 9-11 |
| X | CN 105322227 A (HUIZHOU TCL HYPERPOWER BATTERIES INC. et al.) 10 February 2016 (2016-02-10) description, paragraphs 64-66 | 1, 10-11 |
| Y | CN 111326719 A (CONTEMPORARY AMPEREX TECHNOLOGY CO., LTD.) 23 June 2020 (2020-06-23) description, paragraphs 13 and 127-139 | 2-8 |
| Y | CN 105322227 A (HUIZHOU TCL HYPERPOWER BATTERIES INC. et al.) 10 February 2016 (2016-02-10) description, paragraphs 64-66 | 2-8 |
| Y | CN 111048840 A (LIVING-POWER NEW ENERGY TECHNOLOGY (SHANGHAI) CO., LTD. et al.) 21 April 2020 (2020-04-21) description, paragraphs 5-25 | 2-6 |

☑ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **12 December 2023** | **25 December 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/098028** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 113299996 A (KUNSHAN SYNERGY SCIENTECH CO., LTD.) 24 August 2021 (2021-08-24) <br> description, paragraphs 4-31 | 2-6 |
| Y | CN 105633466 A (NINGDE AMPEREX TECHNOLOGY LTD.) 01 June 2016 (2016-06-01) <br> description, paragraphs 5-23 | 7-8 |
| A | CN 110690501 A (SUNWODA ELECTRIC VEHICLE BATTERY CO., LTD.) 14 January 2020 (2020-01-14) <br> entire document | 1-11 |
| A | KR 20150050149 A (LG CHEMICAL LTD.) 08 May 2015 (2015-05-08) <br> entire document | 1-11 |

Form PCT/ISA/210 (second sheet) (July 2022)

## INTERNATIONAL SEARCH REPORT
### Information on patent family members

| International application No. |
|---|
| **PCT/CN2023/098028** |

| Patent document cited in search report | | | Publication date (day/month/year) | Patent family member(s) | | | Publication date (day/month/year) |
|---|---|---|---|---|---|---|---|
| CN | 111326719 | A | 23 June 2020 | WO | 2020119799 | A1 | 18 June 2020 |
| | | | | US | 2021135289 | A1 | 06 May 2021 |
| | | | | US | 11316197 | B2 | 26 April 2022 |
| | | | | EP | 3796449 | A1 | 24 March 2021 |
| | | | | EP | 3796449 | A4 | 29 September 2021 |
| | | | | EP | 3796449 | B1 | 15 November 2023 |
| | | | | US | 2022209296 | A1 | 30 June 2022 |
| CN | 105322227 | A | 10 February 2016 | None | | | |
| CN | 111048840 | A | 21 April 2020 | None | | | |
| CN | 113299996 | A | 24 August 2021 | None | | | |
| CN | 105633466 | A | 01 June 2016 | None | | | |
| CN | 110690501 | A | 14 January 2020 | None | | | |
| KR | 20150050149 | A | 08 May 2015 | KR | 101649014 | B1 | 17 August 2016 |

Form PCT/ISA/210 (patent family annex) (July 2022)